# EUROPÄISCHE PATENTSCHRIFT

(11) **EP 0 475 479 B1**
(45) Veröffentlichungstag und Bekanntmachung des Hinweises auf die Patenterteilung: **15.12.1993**
(21) Anmeldenummer: 91202045.0
(22) Anmeldetag: 09.08.1991
(51) Int. Cl.: C02F 1/34, E02B 1/00

(54) **Verfahren und Vorrichtung zur Bekämpfung von in Meerwasser frei schwimmenden Medusen**
Method and device for fighting jellyfish in seawater
Procédé et dispositif pour combattre les méduses dans l'eau de mer

(30) Priorität: 01.09.1990 DE 4027746
(43) Veröffentlichungstag der Anmeldung: 18.03.1992
(73) Patentinhaber: METALLGESELLSCHAFT Aktiengesellschaft, 60015 Frankfurt (DE)
(72) Erfinder: Meijer, Johan S., NL-5340 AA Oss (NL)

(56) Entgegenhaltungen:
- PATENT ABSTRACTS OF JAPAN vol. 14, no. 11 (P-988)11.0190
- PATENT ABSTRACTS OF JAPAN vol. 14, no. 186 (M-962((4129) 16.04.90

## Beschreibung

Die Erfindung betrifft ein Verfahren und eine Vorrichtung zur Bekämpfung von in Meerwasser freischwimmenden Medusen, insbesondere für das als Kühlwasser im Kühlsystem von küstennahen Industriebetrieben wie Kraftwerken oder dergleichen eingesetzte Meerwasser.

An den Küsten aller Weltmeere werden in regelmäßigen Zeitabständen wiederkehrend große Mengen von Medusen angespült, die nicht nur in erheblichem Umfang den Strandtourismus beeinträchtigen können, sondern auch die Einlauföffnung für das als Kühlwasser verwendete Meerwasser in das Kühlsystem von küstennahen Industriebetrieben wie Kraftwerken und dergleichen ganz oder teilweise verstopfen können, so daß das Kühlsystem zeitweise ausfällt bzw. stillgelegt und die Medusen mittels mechanischer Hilfsmittel beseitigt werden müssen.

Nach einem aus der JP-A-84 179 123 bekannten Verfahren werden die dabei anfallenden Medusen entwässert, die entstehende Flüssigkeit mit Natriumhypochlorit oder durch ein biologisches Verfahren behandelt und der Festkörperanteil schließlich verascht. Das verbleibende Chlor wird durch einen Nickelkatalysator entfernt und die übrige Flüssigkeit durch ein Aktivkohlefilter geleitet.

Bekannt ist auch, das in das Kühlsystem einströmende Meerwasser mit Calciumhydrochlorit oder Natriumhydrochlorit zu mischen, um die Medusen aufzulösen. Die dabei entstehende Flüssigkeit wird mit frischem Meerwasser versetzt zurück ins Meer gefördert (JP-A-88 111 992).

Abgesehen von den mit den vorgenannten Verfahren verbundenen Belastungen der Umwelt bedürfen beide Verfahren aber auch eines nicht unerheblichen Aufwands im Hinblick darauf, daß periodisch bis zu 6000 t Medusen an einer Einlauföffnung anfallen können.

In der FR-A-2 439 845 sind zur Bekämpfung von Medusen auf dem Meeresgrund ein Drahtnetz verankert und beidseitig des Drahtnetzes jeweils ein perforiertes Rohr angeordnet, aus dem Druckluft austritt. Durch die aufsteigenden Luftblasen werden die Medusen hoch- und aus dem geschützten Meeresbereich fortgespült. Die Wirkung einer derartigen Schutzvorrichtung ist unvollkommen. Im übrigen fallen dabei erheblich Mengen toter Medusen an.

Es ist die Aufgabe der vorliegenden Erfindung, ein Verfahren und eine Vorrichtung zur Durchführung des Verfahrens bereitzustellen, mit denen Medusen aus dem Bereich von Badestränden, insbesondere jedoch aus dem Einzugsbereich des Meeres fernzuhalten, aus dem Meerwasser als Kühlwasser für das Kühlsystem von küstennahen Industriebetrieben wie Kraftwerken oder dergleichen herangezogen wird.

Die Lösung dieser Aufgabe besteht darin, daß das Meerwasser mit niederfrequenten Schallschwingungen behandelt wird.

Für das Fernhalten der Medusen haben sich insbesondere Schallschwingungen mit einer Frequenz von 2000-3200 Hz als geeignet erwiesen.

Im Rahmen der vorzugsweisen Ausgestaltung des Verfahrens werden zunächst Schallschwingungen mit einer Frequenz von 2000-3200 Hz für die Dauer von bis zu 1,5 Minuten und danach mit einer Frequenz von 2000 bis 3200 Hz für die Dauer von bis zu 20 Sekunden ausgesendet.

Zur Durchführung des Verfahrens wird unterhalb der Wasseroberfläche mindestens ein mit einem Tonsender (Tongenerator) verbundener Lautsprecher angeordnet. Da sich die Schallschwingungen bis zu einer Weite von 15 km ausbreiten, werden die Medusen verhältnismäßig weit vor der Küste zurückgehalten.

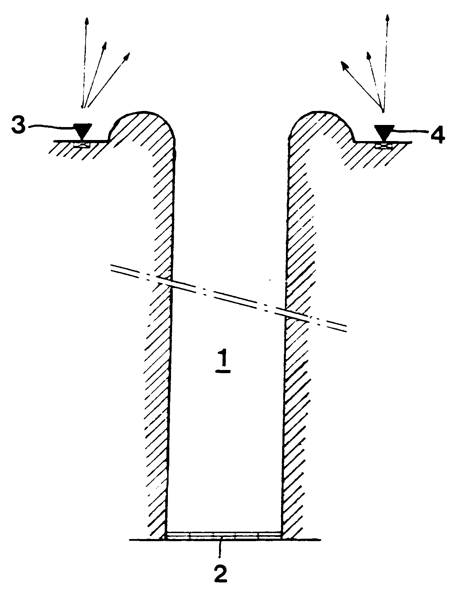

Gemäß der Zeichnung wird das über den Kühlwasserkanal (1) und den Gitterrost (2) in das Kühlsystem eines Kraftwerks einströmende, als Kühlwasser dienende Meerwasser vor dem Einlauf in den Kühlwasserkanal (1) mit Hilfe der unter der Wasseroberfläche beidseitig der Kanalöffnung angeordneten Lautsprecher (3), (4) periodisch in der Weise beschallt, daß zunächst Schallschwingungen mit einer Frequenz von 2000 Hz 1 Minute lang und danach Schallschwingungen mit einer Frequenz von 3200 Hz 15 Sekunden lang ausgesendet werden. Anschließend wiederholt sich die erfindungsgemäße Maßnahme.

Die mit der Erfindung erzielten Vorteile bestehen insbesondere darin, daß bei Betrieb des Verfahrens in weitem Umkreis eines unter der Wasseroberfläche befindlichen Lautsprechers praktisch jedes Auftreten von Medusen unterbleibt.

## Patentansprüche

1. Verfahren zur Bekämpfung von im Meerwasser freischwimmenden Medusen, insbesondere für das als Kühlwasser für das Kühlsystem von küstennahen Industriebetrieben wie Kraftwerken oder dergleichen eingesetzte Meerwasser, dadurch gekennzeichnet, daß das Meerwasser mit niederfrequenten Schallschwingungen behandelt wird.

2. Verfahren nach Anspruch 1, dadurch gekennzeichnet, daß die Frequenz der Schallschwingungen 2000-3200 Hz beträgt.

3. Verfahren nach den Ansprüchen 1 und 2, dadurch gekennzeichnet, daß zunächst Schallschwingungen mit einer Frequenz von 2000-3200 Hz für die Dauer von bis zu 1,5 Minuten und danach Schallschwingungen mit einer Frequenz von 2000 bis 3200 Hz für die Dauer von bis zu 20 Sekunden ausgesendet werden.

4. Vorrichtung zur Durchführung des Verfahrens nach den Ansprüchen 1 bis 3, dadurch gekennzeichnet, daß unterhalb der Wasseroberfläche wenigstens ein mit einem Tonsender (Tongenerator) verbundener Lautsprecher (3, 4) angeordnet ist.

## Claims

1. A method for combatting jellyfish floating freely in seawater, in particular for the seawater used as cooling water for the cooling system of coastal industrial plants, such as power stations or the like, characterised in that the seawater is treated with low-frequency sound vibrations.

2. A method according to Claim 1, characterised in that the frequency of the sound vibrations is 2000-3200 Hz.

3. A method according to Claims 1 and 2, characterised in that initially sound vibrations having a frequency of 2000-3200 Hz are emitted for a duration of up to 1.5 minutes and then sound vibrations having a frequency of 2000 to 3200 Hz are emitted for a duration of up to 20 seconds.

4. An apparatus for performing the method according to Claims 1 to 3, characterised in that at least one loudspeaker (3, 4) connected to a sound transmitter (audiofrequency generator) is located beneath the water surface.

## Revendications

1. Procédé pour lutter contre des méduses nageant librement dans l'eau de mer, notamment pour de l'eau de mer utilisée comme eau de refroidissement du système de refroidissement d'usines industrielles proches des côtes, comme des centrales électriques ou analogues, caractérisé en ce qu'il consiste à traiter l'eau de mer par des vibrations acoustiques basses fréquences.

2. Procédé suivant la revendication 1, caractérisé en ce que la fréquence des vibrations acoustiques est comprise entre 2000 et 3200 Hz.

3. Procédé suivant la revendication 1 ou 2, caractérisé en ce qu'il consiste à émettre d'abord des vibrations acoustiques d'une fréquence de 2000 à 3200 Hz pendant une durée allant jusqu'à une minute et demie et ensuite des vibrations acoustiques d'une fréquence de 2000 à 3200 Hz pendant une durée allant jusqu'à 20 secondes.

4. Dispositif pour la mise en oeuvre du procédé suivant l'une des revendications 1 à 3, caractérisé en ce qu'en-dessous de la surface de l'eau est disposée au moins un haut-parleur (3,4) relié à un émetteur de son (générateur de son).
